Europäisches Patentamt

European Patent Office

Office européen des brevets

(19)

(11) Numéro de publication : **0 489 635 A1**

# (12) DEMANDE DE BREVET EUROPEEN

(21) Numéro de dépôt : 91403255.2

(22) Date de dépôt : 02.12.91

(51) Int. Cl.⁵ : **F16B 19/10**, F16B 31/00, B25B 27/00, B21J 15/06

(30) Priorité : 03.12.90 FR 9015099

(43) Date de publication de la demande : 10.06.92 Bulletin 92/24

(84) Etats contractants désignés : DE FR GB IT

(71) Demandeur : OTALU S.A.
Z.I. de l'Albanne Route d'Apremont
F-73490 La Ravoire (FR)

(72) Inventeur : **Filiot, Gérard**
**1677 Route de l'Epine**
**F-73 290 La Motte Servolex (FR)**

(74) Mandataire : **Bourgognon, Jean-Marie**
**Cabinet Flechner 22, Avenue de Friedland**
**F-75008 Paris (FR)**

(54) **Boulon à sertir démontable et procédé d'assemblage de deux pièces l'une à l'autre à l'aide de ce boulon.**

(57) Il comprend une tige ayant, à l'une des extrémités, une tête (2) un manchon (3) enfilé sur la tige en un matériau déformable, la partie filetée de la tige s'étend jusqu'à l'extrémité de celle-ci opposée à la tête. Assemblage de pièces.

FIG_1

EP 0 489 635 A1

Jouve, 18, rue Saint-Denis, 75001 PARIS

La présente invention se rapporte aux boulons à sertir et aux procédés d'assemblage de deux pièces l'une à l'autre, à l'aide d'un boulon de ce genre.

Par la demande de brevet européen 286 244, on connaît déjà un boulon à sertir en aveugle et démontable destiné à assembler deux pièces ayant des alésages alignés. Ce boulon comprend notamment une tige ayant, à l'une des extrémités, une tête d'un diamètre plus grand que celui de la tige et une partie filetée, et un manchon enfilé sur la tige et adjacent à la tête, en un matériau plus déformable que la tige. Une bague est enfilée sur la tige, à l'arrière du manchon et, au cours du sertissage du boulon sur les pièces à assembler, cette bague s'incruste dans la partie filetée de la tige, sous la pression d'un outil conique. A la longue, il se produit des incrustations dans l'outil qui provoquent un grippage qui, non seulement, peut aller jusqu'à provoquer le coincement de l'outil, mais qui, en tout cas, provoque l'arrachement de la couche anti-corrosion de la bague et sa détérioration rapide. En outre, l'incrustation de l'intérieur de la bague, dans la partie filetée, est un phénomène qui ne peut pas être maîtrisé. La loi régissant la transformation de l'effort appliqué à la bague, en une contrainte sur les pièces à assembler, est variable, alors que l'on recherche justement une grande précision de serrage des pièces. De plus, l'effort de la bague n'est pas transmis intégralement aux pièces à assembler, une partie de cet effort étant absorbée par le boulon lui-même. Les contraintes appliquées aux pièces à assembler varient d'un assemblage à l'autre.

Au FR-B-2.246.199, on décrit non pas un boulon à sertir destiné à l'assemblage de deux pièces, mais une cheville filetée pouvant être fixée sur une paroi accessible d'un seul côté, mais qui, une fois fixée, n'est plus démontable même en ayant accès des deux côtés, car la cheville est alors prisonnière de la tôle prise entre un bourrelet d'un côté et un rebord du manchon. On prévoit de serrer un écrou sur la cheville filetée avec transmission de la traction au manchon, mais non de l'approcher d'une tôle à fixer, sans serrage.

L'invention vise un boulon à sertir, exempt de toute possibilité de grippage, et par là-même du danger de corrosion précédemment indiqué, et dont le rendement effort contrainte est maîtrisé avec une grande stabilité des contraintes. Ce boulon, tout comme les boulons antérieurs, peut être monté en aveugle, ce qui est intéressant non pas tellement parce qu'on n'y a pas accès des deux côtés, mais parce que cela facilite son montage par un robot, tout en étant ultérieurement démontable en accédant des deux côtés. En outre, la fabrication de la tige est simplifiée.

Le boulon à sertir suivant l'invention est défini à la revendication 1.

On peut ainsi se dispenser d'une bague destinée à s'incruster dans les filets du filetage de la tige, pour la remplacer par un écrou destiné à se visser sur celle-ci, suivant un mode de pose adéquat avec mise en contrainte de l'assemblage avant vissage. Il n'y a plus ni grippage, ni corrosion. Comme les efforts provoquant le serrage des pièces à assembler sont transmis maintenant d'une manière purement axiale, et non plus comme auparavant par déformation radiale de la bague sur la tige, le rendement, c'est-à-dire le rapport entre l'effort appliqué par le boulon et la contrainte obtenue sur les pièces à assembler, non seulement est supérieur à celui obtenu avec les boulons antérieurs, mais, en outre, peut être mieux maîtrisé d'un assemblage à l'autre, et est donc mieux reproductible.

Suivant un mode de réalisation, un tube-entretoise est enfilé sur la tige derrière le manchon, a un diamètre intérieur inférieur au diamètre extérieur du manchon et est en un matériau moins déformable que celui du manchon. Cette entretoise sert à transmettre la poussée pour le sertissage et également au centrage de la tige dans les pièces à assembler.

Suivant un perfectionnement, l'écrou qui est vissé sur la partie filetée comporte une partie avant conique de centrage de plus petit diamètre extérieur, inférieur ou égal au diamètre extérieur du manchon. Cela assure le centrage, notamment dans la pièce arrière.

Lorsque le boulon est posé, le tube-entretoise n'est en contact, au plus, qu'avec l'une des 2 pièces, manchon ou écrou.

Avantageusement, il est prévu un téton ou une cavité, de préférence polygonale, à l'autre extrémité de la tige. Ce téton est destiné au maintien de la tige par un outil conjugué.

L'invention a également pour objet un procédé d'assemblage de deux pièces l'une à l'autre ayant des alésages alignés et une épaisseur totale inférieure à la longueur de la tige, caractérisé en ce qu'il consiste :

– à engager par le côté arrière des pièces la tige munie du manchon et, éventuellement, du tube-entretoise, dans les alésages jusqu'à ce que le manchon dépasse du côté avant des pièces, et à maintenir immobile la face arrière du manchon, éventuellement par l'intermédiaire de l'entretoise, par un outil extérieur ;

– à tirer la tige par l'extrémité filetée jusqu'à déformation du manchon en un bourrelet devant la face avant de la pièce la plus proche de la tête ;

– à cesser de maintenir immobile la face arrière du manchon par un outil extérieur ;

– à visser sur la tige filetée l'écrou jusqu'à ce que la face avant de l'écrou soit, au plus, juste en contact avec la face arrière de la pièce arrière,

– à pousser la face arrière de la pièce arrière vers l'avant par un outil extérieur, tout en tirant sur la tige jusqu'à ce que soient atteintes au moins les contraintes de serrage souhaitées pour l'assemblage, l'écrou se trouvant alors à distance de la face arrière de la pièce arrière ; et

– à visser l'écrou jusqu'à ce qu'il vienne juste en contact avec cette face arrière.

Suivant un perfectionnement, le procédé consiste à tirer sur la tige par une douille taraudée et à faire coopérer le téton ou la cavité de l'extrémité filetée de la tige, avant et pendant le vissage de l'écrou sur la tige.

Au dessin annexé, donné uniquement à titre d'exemple :

les figures 1 à 6 sont des vues à moitié en élévation et à moitié en coupe illustrant la pose du boulon suivant l'invention, la figure 7 est un graphique illustrant la variation de la contrainte subie par les pièces à assembler, en fonction de la force de traction appliquée à la tige, et

la figure 8 est une vue analogue à la figure 1 d'une variante de réalisation.

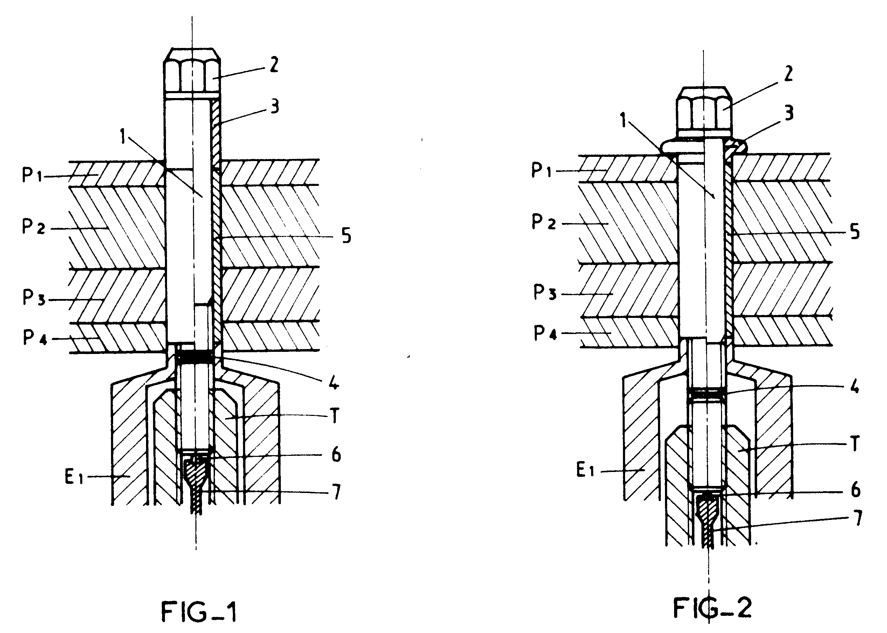

Le boulon à sertir, représenté à la figure 1, comprend, avant d'être posé, une tige 1 ayant, à l'une des extrémités, une tête 2 d'un diamètre plus grand que celui de la tige 1. L'extrémité de la tige 1 opposée à la tête 2 est filetée. Un manchon 3 est enfilé sur la tige 1, en étant adjacent à la tête 2. Ce manchon est en un matériau plus déformable que la tige 1. Une gorge de rupture 4 est prévue sur la tige 1. Un tube-entretoise 5, de diamètre intérieur inférieur au diamètre extérieur du manchon 3 et en un matériau moins déformable que celui du manchon 3, est enfilé sur la tige 1 derrière le manchon 3. Aux figures 1 à 6 et 8, le haut de la figure représente l'avant et le bas de la figure l'arrière.

Sur la figure 1, on souhaite assembler quatre pièces P1, P2, P3 et P4 ayant des alésages alignés et une épaisseur totale inférieure à la longueur de la tige 1. Pour cela, on a engagé, par le côté arrière des pièces, donc par le côté de la pièce P4, la tige 1 munie du manchon 3 et de l'entretoise 5, par la tête 2, dans les alésages, jusqu'à ce que le manchon 3 dépasse du côté avant des pièces P. Par un outil extérieur E1, on maintient immobile la face arrière de l'entretoise 5, et donc par là-même du manchon 3. Il est prévu un dispositif de traction T permettant de tirer la tige 1 vers l'arrière. L'extrémité arrière de la tige 1 porte un téton 6 hexagonal coopérant avec une cavité 7 de même conformation permettant, lorsque le téton et la cavité coopèrent, d'immobiliser la tige 1 en rotation et d'empêcher de la tirer vers l'avant, tout en permettant de la tirer vers l'arrière.

A la figure 2, on a tiré sur la tige 1 par l'extrémité filetée, jusqu'à déformation du manchon 3 en un bourrelet devant la face avant de la pièce P1.

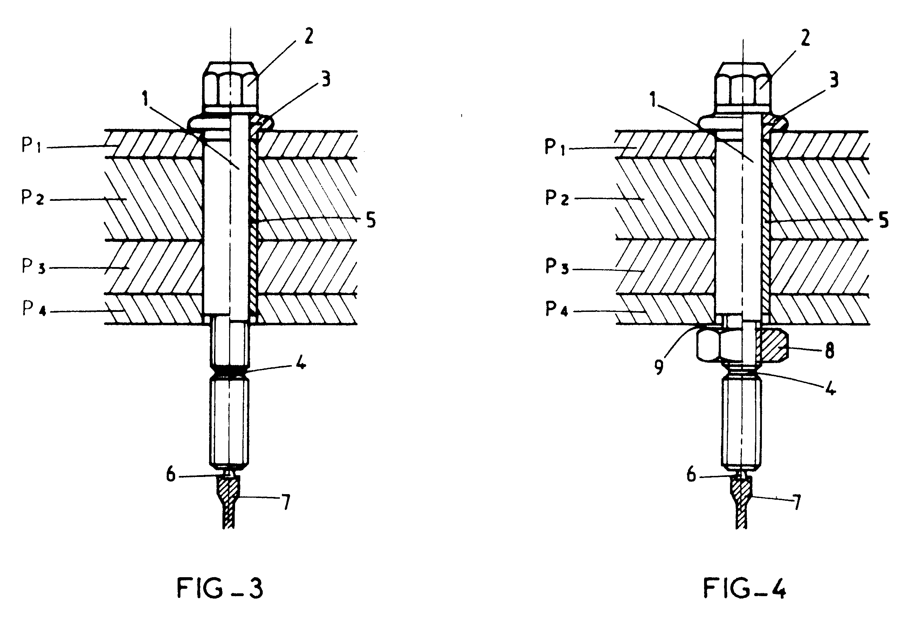

A la figure 3, on a enlevé l'outil E1 et le dispositif de traction T. La face arrière du manchon 3 n'est donc plus maintenue immobile par l'outil extérieur E1, par l'intermédiaire du tube-entretoise 5.

A la figure 4, on a vissé sur la tige 1 filetée un écrou 8, jusqu'à ce que la face avant 9 de l'écrou, soit

au plus juste en contact avec la face arrière de la pièce P4. En l'espèce, elle en est à 1 mm.

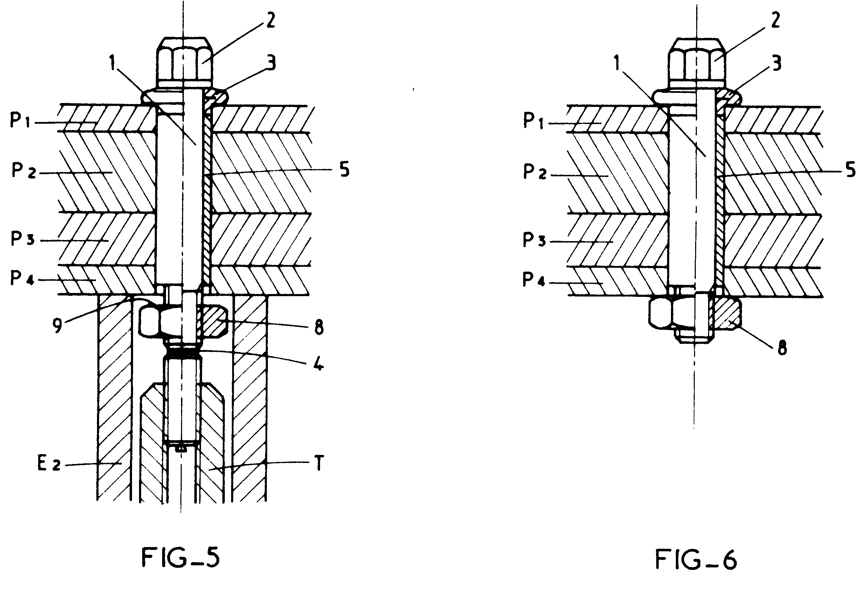

A la figure 5, on a poussé la face arrière de la pièce P4 vers l'avant par un outil extérieur E2, tout en tirant sur la tige 1 par le dispositif de traction T qui a été remis en position de fonctionnement, jusqu'à ce que soient atteintes au moins les contraintes de serrage souhaitées pour l'assemblage des quatre pièces P1 à P4, la face avant 9 de l'écrou se trouvant alors à distance de la face arrière de la pièce P4.

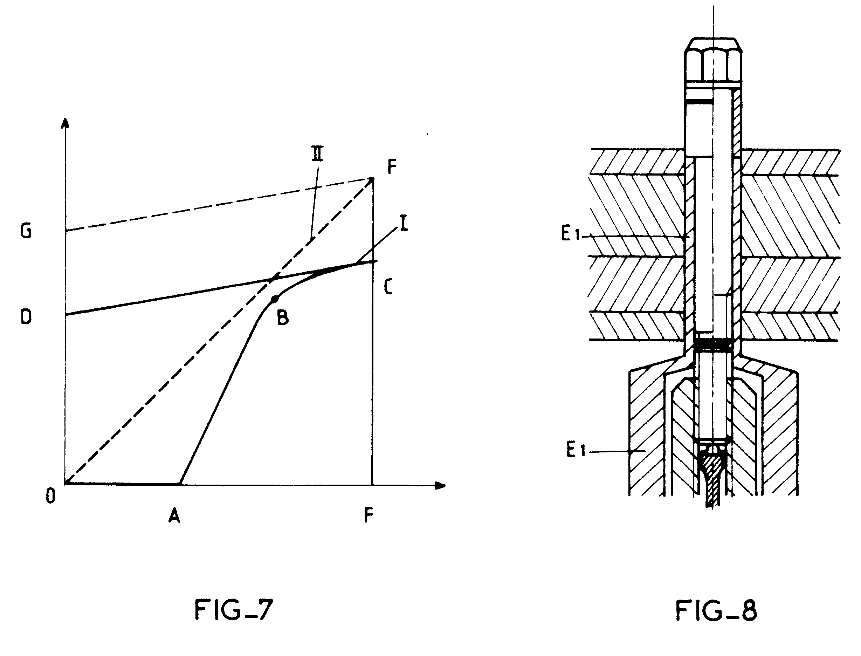

A la figure 6, on a vissé l'écrou 8, jusqu'à ce qu'il vienne juste en contact avec la face arrière de la pièce P4, sans serrer celle-ci, puis on a retiré l'outillage. Le graphique de la figure 7 a été obtenu en mesurant la contrainte appliquée sur les pièces P1 à P4, exprimée en unités de force, en fonction de l'effort de traction sur la tige exprimé dans les mêmes unités de force.

La courbe I est celle obtenue avec un rivet du type décrit à la demande de brevet européen 286 244. Elle se compose d'un segment de droite OA, correspondant à la formation du bourrelet 3, puis d'un segment de droite AB, correspondant à une mise en tension efficace des pièces à assembler, suivi d'un tronçon de courbe BC, sensiblement horizontal, correspondant à une perte de l'effort dans le boulon lui-même, et notamment en raison des forces exercées sur l'entretoise ou sur ce qui en tient lieu à la demande de brevet européen 286 244, la dernière partie de la courbe CD correspondant au relâchement des tensions des pièces P1 à P4, lors du dévêtissage de l'outil de pose.

La courbe II en traits mixtes est celle obtenue avec un boulon suivant l'invention, de même dimension que celui avec lequel on a obtenu la courbe I. Elle se compose d'un segment de droite OF, sensiblement à 45°, suivi du segment de droite FG correspondant au segment de droite CD de la courbe I. Pour une même force F1 de traction sur la tige, la contrainte appliquée aux pièces P1 à P4 est supérieure, dans le cas suivant l'invention, du montant correspondant au segment de droite DG. En outre, alors que la courbe II à une bonne reproductibilité d'un assemblage à l'autre, pour un boulon à sertir et des pièces de même dimension, la courbe I présente un résultat final OD très irrégulier.

La figure 8 illustre une variante dans laquelle il n'est pas prévu de tube-entretoise 5, l'outil extérieur E1 pénétrant, cette fois, dans les alésages pour venir directement en appui derrière le manchon 3.

**Revendications**

1. Boulon à sertir pour l'assemblage de deux pièces, comprenant, avant d'être posé :

– une tige (1) ayant, à l'une des extrémités, une tête (2), d'un diamètre plus grand que celui de la tige (1), et une partie filetée ;

– un manchon (3) enfilé sur la tige (1) et adjacent à la tête (2) en un matériau plus déformable que la tige (1) ;
caractérisé en ce que l'agencement est tel que l'on peut visser sur la partie filetée de la tige (1) un écrou (8) jusqu'à ce qu'il vienne en contact avec l'une des pièces à assembler.

2. Boulon à sertir suivant la revendication 1, caractérisé par un tube-entretoise (5) enfilé sur la tige (1) derrière le manchon (3) de diamètre intérieur inférieur au diamètre extérieur du manchon (3) et en même matériau moins déformable que celui du manchon (3).

3. Boulon à sertir suivant la revendication 2, comprenant, une fois posé alors que le manchon est déformé en un bourrelet,
    – une tige (1) ayant, à l'une des extrémités, une tête (2), d'un diamètre plus grand que celui de la tige (1), et une partie filetée ;
    – un manchon (3) enfilé sur la tige (1) et adjacent à la tête (2) en un matériau plus déformable que la tige (1) ;
caractérisé par un écrou (8) vissé sur la partie filetée et en contact avec l'une des pièces à assembler

4. Boulon à sertir suivant la revendication 3, caractérisé en ce que l'écrou (8) comporte une partie avant (9) conique de centrage de diamètre extérieur inférieur ou égal au diamètre extérieur du manchon (3).

5. Boulon à sertir suivant la revendication 3 ou 4, caractérisé par un tube-entretoise (5) enfilé sur la tige, derrière le manchon (3), de diamètre intérieur inférieur au diamètre extérieur du manchon (3) et en un matériau moins déformable que celui du manchon (3), le tube-entretoise n'étant en contact au plus qu'avec l'un du manchon (3) et de l'écrou (8) après l'assemblage.

6. Boulon à sertir suivant l'une des revendications 1 à 5, caractérisé par un téton (6) ou une cavité de préférence polygonale, à l'autre extrémité de la tige (1), et destiné au maintien de la tige (1) par un outil conjugué (7).

7. Procédé d'assemblage de deux pièces (P1 à P4) l'une à l'autre, ayant des alésages alignés et une épaisseur totale inférieure à la longueur de la tige (1), caractérisé en ce qu'il consiste :
    – à engager par le côté arrière des pièces (P1 à P4) le manchon (3) et, éventuellement, le tube-entretoise (5), dans les alésages jusqu'à ce que le manchon (3) dépasse du côté avant des pièces (P1 à P4), et à maintenir immobile la face arrière du manchon (3), éventuellement par l'intermédiaire de l'entretoise (5), par un outil extérieur (E1) ;
    – à tirer la tige (1) par l'extrémité filetée jusqu'à déformation du manchon (3) en un bourrelet devant la face avant de la pièce (P1) la plus proche de la tête (2) ;
    – à cesser de maintenir immobile la face arrière du manchon (3) par un outil extérieur (E1) ;
    – à visser sur la tige (1) filetée l'écrou (8) jusqu'à ce que la face avant de l'écrou (8) soit au plus, juste en contact avec la face arrière de la pièce arrière (P4) ;
    – à pousser la face arrière de la pièce arrière (P4) vers l'avant par un outil extérieur (E2), tout en tirant sur la tige (1) jusqu'à ce que soient atteintes au moins les contraintes de serrage souhaitées pour l'assemblage, l'écrou (8) se trouvant alors à distance de la face arrière de la pièce arrière (P4) ; et
    – à visser l'écrou (8) jusqu'à ce qu'il vienne juste en contact avec cette face arrière.

8. Procédé suivant la revendication 7, caractérisé en ce qu'il consiste à tirer sur la tige (1) par une douille taraudée (T) et à faire coopérer le téton (6) ou la cavité de l'extrémité filetée de la tige (1) avant et pendant le vissage de l'écrou (8) sur la tige (1).

FIG-2

FIG-1

5

FIG_3

FIG_4

EP 0 489 635 A1

FIG_6

FIG_5

FIG_8

FIG_7

Office européen
des brevets

**RAPPORT DE RECHERCHE EUROPEENNE**

Numero de la demande

EP    91 40 3255

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 286 244  (AVDEL LTD)<br>* Colonne 3, lignes 30-41; figures 1-4 * | 1 | F 16 B   19/10<br>F 16 B   31/00<br>B 25 B   27/00<br>B 21 J   15/06 |
| X | FR-A-2 246 199  (SCHRUFF)<br>* Page 4, ligne 11 - page 5, ligne 27; figures 1a-4b * | 1 | |
| Y | | 2-4,6,7 | |
| Y | US-A-4 312 613  (BINNS)<br>* Colonne 4, ligne 4 - colonne 5, ligne 54; figures 1-5 * | 2,3 | |
| Y | US-A-3 222 976  (HOLMAN)<br>* Figure 2 * | 4 | |
| Y | EP-A-0 154 817  (MONOGRAM IND., INC.)<br>* Revendication 9; figure 1 * | 6 | |
| Y | GB-A-2 223 075  (HYDRA-TIGHT LTD)<br>* Abrégé; figure 1 * | 7 | |

DOMAINES TECHNIQUES
RECHERCHES (Int. Cl.5)

F 16 B
B 25 B
B 21 J

Le présent rapport a été établi pour toutes les revendications

| Lieu de la recherche | Date d'achèvement de la recherche | Examinateur |
|---|---|---|
| LA HAYE | 26-02-1992 | CALAMIDA G. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................
& : membre de la même famille, document correspondant

EPO FORM 1503 03.82 (P0402)